# EUROPEAN PATENT SPECIFICATION

(11) **EP 0 315 589 B1**
(45) Date of publication and mention of the grant of the patent: **08.09.1993**
(21) Application number: 88810726.5
(22) Date of filing: 25.10.1988
(51) Int. Cl.: G03B 27/72

(54) **Apparatus for producing modified photograhic prints**
Vorrichtung zur Herstellung geänderter Abdrucke
Dispositif de production de photographies modifiées

(30) Priority: 03.11.1987 US 117011
(43) Date of publication of application: 10.05.1989
(73) Proprietor: ILFORD Limited, Mobberley Knutsford Cheshire WA16 7HA (GB)
(72) Inventor: Reed, William G., Seattle, WA 98118 (US); Maginness, Maxwell G., Dr., Redmond, WA 98052 (US)
(74) Representative: Matthews, Richard Nordan

(56) References cited:
- EP-A- 0 054 848
- US-A- 3 926 520
- US-A- 4 239 385
- US-A- 4 583 186
- SID INTERNATIONAL SYMPOSIUM, DIGEST OF TECHNICAL PAPERS, 1st edition, June 1984, pages 316-319, Polisades Institute for Research Services Inc., New York, US; S. MOROZUMI et al.: "4.25-in. and 1.51-in. B/W and full-color LC video displays addressed by poly-Si TFTs"

## Description

### Background of the Invention

This invention relates to an apparatus for making photographic prints from negatives or from slides and, more particularly, relates to an apparatus for locally correcting the density and/or contrast of photographic negatives or slides prior to making the print to correct for localized areas of over - or underexposure in the negative or slide.

Oftentimes, when a photograph is taken, due to the conditions at the time the photograph is taken, there will be areas on the film negative produced after developing the film that are over - or underexposed relative to what can be reproduced on a photographic print. If the negative is printed using normal techniques, the photographic print will have areas where the image is either too light or too dark to be reasonably visible or aesthetically pleasing to the photographer. The overall density of the print can be corrected by changing the exposure time in printing the negative; however, this has a uniform effect over the entire print area with the result that, if the exposure time is decreased to 'brighten' the print exposure from dark areas of the negative, it will result in an overexposure of the normal areas to the point where they are washed out. On the other hand, if there are overexposed areas on the negative, an increase in exposure time during printing to draw out the detail in these overexposed areas then can result in the normally exposed areas of the film producing print portions that are too dark to see otherwise visible detail.

It is known in the photographic industry to use techniques known as 'dodging' or 'burning' in which a density mask is built up using pieces of film or other material that are then held in the exposure path when the print is being made to adjust for the over - or underexposure of certain areas of the film. However, this technique is difficult to uniformly perform on a repeated basis because of the inherent inaccuracies in placing the density mask in the proper location each time the print is made and necessitates a greater amount of time to adjust from print to print. Also, the results of the process are not known until after the print is made and if the results are unsatisfactory, another attempt must be made in a trial-and-error method until the satisfactory result is obtained. While some attempts have been made to obtain local density corrections, most of those techniques involve an automatic application of a density correction algorithm by a computer with no selective operator input. Also, those techniques do not allow a real-time view of the correction by the operator to permit selective adjustment.

An example of a prior art patent specification which describes local density correction but with no selective operator input is the apparatus described in US-A-3926520.

An example of a prior art patent specification which describes local density correction with some selective operator input but no real-time view of the correction made by the operator is the apparatus described in US-A-4239385.

It is, therefore, an object of the present invention to provide an apparatus for producing a photographic print from a negative or slide in which areas of over - and underexposure can be locally corrected without the necessity for manually placing a density mask in particular areas of the optical path. It is a further object of this invention to provide a local density correction mask that can be adjusted on a localised-area basis prior to making the print with real-time control by the operator and observation of the result to avoid trial-and-error techniques in printing. Another object of the invention is to provide a locally variable color mask that can be used with variable-contrast paper to locally adjust the contrast of the resulting photographic prints.

### Summary of the invention

Photographic printer comprising: a light source (12;60;92); means (94) for holding a film negative (10;62) in the optical path so as to be illuminated by said light source (12;60;92) to form an image of the negative on a photosensitive element (20;96) mounted in the printer; a video camera (16;120) positioned for viewing the light passing the film negative (10;62) and producing a video signal representative of that image; a processor (26;78;97) coupled to said video camera (16;120); a matrix array (24;68;90) of light valve elements interposed between said light source (12;60;92) and the photosensitive element (20;96); control means (23;80;98) coupled to said processor (26;78;97) being arranged to selectively modify, as a function of the signals received from said control means (23;80;98), the light transmission of each element of the matrix array (24;68;90) to locally correct areas of over - or underexposure of said negative (10;62), characterised by said matrix array being a liquid crystal matrix array (24;68;90), said processor (26;78;97) comprising means for digitising the video signal from said video camera (16;120), and further characterised by a monitor (28) being coupled to said digitising means to enable an operator of the printer to view the resulting image of said film negative (10;62).

In the preferred embodiment, the TV camera views an image directly from the film negative - LCD combination. The same image is simultaneously optically transmitted by means of a beam splitter to the photographic paper. A shutter is interposed between the beam splitter and the photographic paper so that the photosensitive paper is not exposed to the light image from the negative until the operator selectively opens the shutter. The real-time image from the TV camera shows the operator what the print will look like. The operator has an input means that can be used to alter the digitized image in the digitizing means. The altered signal is sent back to the LCD matrix in a closed loop until the real-time image appearing on the monitor is satisfactory to the operator. At that time the operator can selectively open the shutter, allowing the image from the negative - LCD combination to be exposed onto the photosensitive paper, producing a photographic print corresponding to the altered digitized image on the monitor.

In one embodiment of the invention the LCD matrix comprises a selectively color-transmissive screen so that color correction, as well as density correction, can be accomplished. The color correction can be used to correct the color shift that will inherently be produced by the LCD mask. Also, when used with variable-contrast paper that is responsive to different wavelengths of light, the local color correction can be used to locally vary the contrast in a resulting black and white print.

### Brief Description of the Drawings

The objects and advantages of the present invention will be better understood by those of ordinary skill in the art and others upon reading the ensuing specifications taken in conjunction with the appended drawings, wherein:
FIGURE 1 is a block diagram of one embodiment of a photographic printer system using the closed-loop density and/or contrast correction apparatus of the present invention;
FIGURE 2 is a block diagram showing the density correction apparatus of the present invention utilized in a system for producing an internegative for producing prints from slides or for producing an interpositive for producing multiple prints on an automatic printer;
FIGURE 3 is a schematic diagram of an apparatus in which a large-area liquid crystal display matrix is used to control, on a local-area basis, the contrast of a multiple-contrast photosensitive paper;
FIGURE 4 is a schematic side view of a TV camera having a pinhole lens; and
FIGURE 5 is a schematic diagram of a color calibration system for use with the systems of FIGURES 1, 2, and 3.

### Detailed Description of the Preferred Embodiment

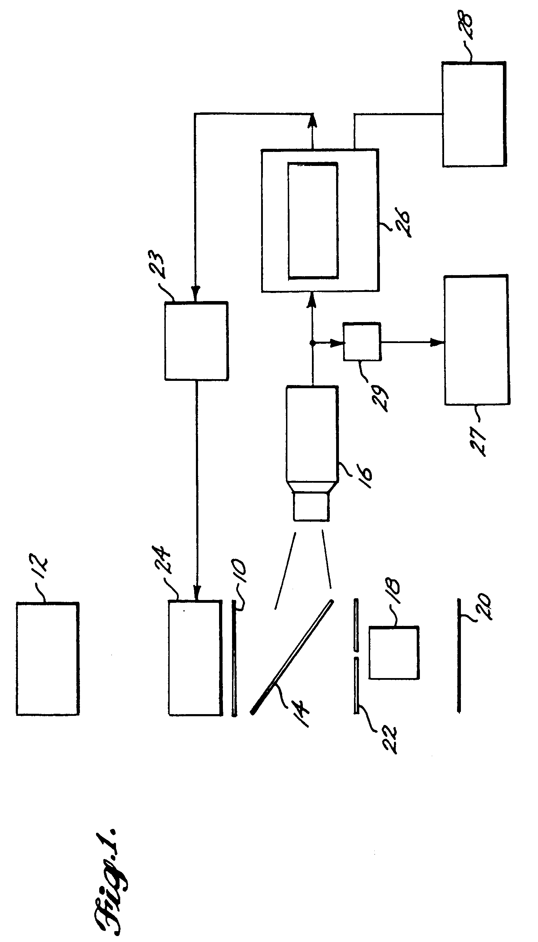

Referring to FIGURE 1, a basic apparatus setup for carrying out the matrix density correction techniques of the present invention is shown in block diagram form. A film negative 10 is illuminated by a light source 12 and the image of the negative is cast upon a beam splitter 14. The beam splitter 14 reflects the image to a video camera 16 and also passes the image to a lens system 18. The lens system 18 focuses the image on a photosensitive paper 20 to produce a photographic print. A shutter 22 is placed in the optical path between the negative 10 and the paper 20 to control the exposure of the negative image onto the paper. In order to modify the image projected by the negative, a screen 24 comprised of a liquid crystal matrix array is placed between light source 12 and negative 10. The light transmission through the LCD screen 24 is controllable by varying the light transmission through the LCD elements so that a pixel-by-pixel variation of light passage can be accomplished. In the pictured embodiment the LCD screen 24 is controlled by a computer processor 26. The processor is also coupled to the video camera 16 and is programmed to digitize the image from the camera and store is in memory in the matrix array. A suitable processor has been found to be an IBM PC-XT containing a PC-Vision Frame Grabber circuit board accessory sold by Imaging Technology, Inc. The PC-Vision circuit board matches the television resolution of 512x512 pixels in 8-bit gray scale per pixel. A monitor 28 is coupled to the processor so that the real-time image contained in the processor can be viewed by an operator. The processor also contains an operating program that allows the digitized image to be altered by the operator on a pixel-by-pixel basis by inputting through a keyboard, a mouse, a light pen, or some other input device. The altered image is then viewable on the monitor. The image from the processor is relayed to the LCD screen 24 to alter the screen and thereby the light transmission through the screen for the film negative 10. A suitable liquid crystal display matrix has been found to be an LCD array from a National (Panasonic) TR-3LT1 pocket television. If necessary, the image from the processor is fed through an RF modulator 23 to the LCD screen in order to obtain the proper video format. The National array has a 240x372 pixel resolution and a 14:1 attainable contrast ratio. The image from the processor controls the LCD matrix 24 to turn individual pixels on or off or to a desired transmission level, to allow transmission or blockage of light through the LCD in accordance with the image viewed on the monitor. In this manner, a pixel-by-pixel correction of the print density can be made by turning desired pixels on or off or to selected optical density in a selected manner to effect the transmission of light from the lamp through the negative.

The system shown in Figure 1 is essentially a closed-loop system having a feedback loop between the TV camera and the LCD matrix to provide a real-time display of the image that will be produced by the negative. The real-time display of the image that will be produced by the negative. The real-time display allows the operator to view the results of his corrections concurrently with the time at which they are made. The operator then has an opportunity to view the corrected image prior to printing rather than waiting until a sample print can be run. The present system allows a controlled modification of the print image to occur instead of a trial-and-error basis.

The LCD matrix image modification system shown in FIGURE 1 includes two video output devices, namely, the video monitor for operator interaction and the LCD screen for image modification. Each device has quite different types of information displayed and, since there is only one image output from the PC vision board at any one time, it would seem necessary to use a separate PC vision board for each video output device. While that is a possibility, it is possible to use only a single PC vision board, which amounts to a cost reduction for the system. The following is a brief description of how the matrix shutter system can be achieved with a single Frame Grabber image-digitizing board.

The key to using a single image-digitizing board is that only one video output device need be active at any one point in time. If the operator is interacting with the shutter program to modify the image, the LCD screen is active but the operator is not interacting with the program. Therefore, to use a single image-digitizing board and single memory, the system needs only to keep track of whether a print is being exposed or if the operator is interacting with the shutter system to alter the image. The processor software keeps a copy of both the LCD screen and monitor images in program memory and loads the appropriate image into the digitizing board memory as necessary. For user convenience, and additional video monitor 27 displaying the TV camera output may be used. The second monitor would display a replica of the negative, rather than the finally desired positive image, but video inverter 29 can be used to convert the image. Monitor 27 will then show the effect of corrections as they are made. As discussed above, the digitized image is stored and operated on by an operator through means of a keyboard or other input device or, alternatively, by a program that is formulated to control the density of the image according to certain criteria by adjusting the density of any pixels that are greater or less than a desired density in accordance with a predetermined algorithm. The shutter 22 is kept closed during the image manipulation. Once the desired image is available on the monitor, the shutter 22 is opened, allowing the print to be made.

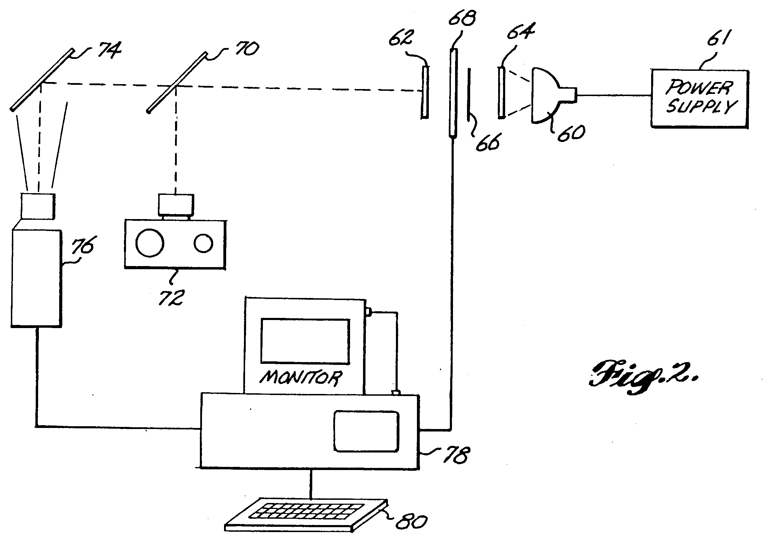

It has been found that the local matrix density correction method of the present invention is also useful in making the internegatives used in producing photographic prints from photographic slides. The contrast range in a slide is on the order of 1000:1 while the contrast available in most photographic print paper is only on the order of 40:1. By using the method of the present invention, it is possible to compress the density range of the slide to more effectively be reproduced on paper of narrower density range. FIGURE 2 shows a simplified setup for producing internegatives of photographic slides. A lamp 60 powered by power supply 61 is illuminated and provides light to illuminate a slide 62 in the optical path. An infrared remover 64 and a diffuser 66 are placed in the optical path to adjust the beam of light from the lamp in accordance with standard optical principles. An LCD matrix 68 is placed between the lamp and the slide, after the diffuser, and is used to modify the light beam from the lamp being projected onto the slide. The image from the slide is then focused on a beam splitter 70 that turns the image 90 degrees to the lens of a still camera 72 and also transmits the image to a mirror 74, which then turns the image 90 degrees to focus on a TV camera 76. The mirror 74 is used to make the image seen by the TV camera 76 congruent with that seen by the still camera 72. The TV camera then outputs its video signal to a processor 78 that is programmed to digitize the image and to operate upon the digitized image to adjust the density of those portions of the image that are above or below a threshold density in accordance, again, with a preselected algorithm. In addition, corrections can be made manually by an operator through keyboard 80 entries. The image from the processor is fed both to the LCD matrix 68 and to a video monitor 82 so that, again, a real-time image of the altered slide image can be viewed by the operator. When the alteration to the slide image has been accomplished to the operator's satisfaction, the operator can operate the still camera 72 to produce a photograph of the slide image, which then can be used to make an internegative that can be printed to make one or more photographic prints derived from the slide 62.

In the previous examples, the LCD matrix has been typically used to modify the image used to produce density changes in black and white or color prints. When printing black and white photographs, different contrast papers can be used, from high to low contrast. Certain black and white photographic papers, such as that sold by ILFORD Company under the trademark MULTIGRADE, have a variable-contrast property that is triggered by the exposure of the paper to different colors of light. For example, the use of blue light produces a contrast of one range and the use of green light produces a contrast of a different range. A selectively color-transmissive LCD array can be used in place of the array 24 in FIGURE 1 to locally vary the color content and intensity of the negative image projected onto a black and which variable-contrast photosensitive paper. It is therefore possible to adjust on a local-area basis the contrast of the paper 96 in accordance with the needs of the operator to alter the contrast of the print produced from the negative.

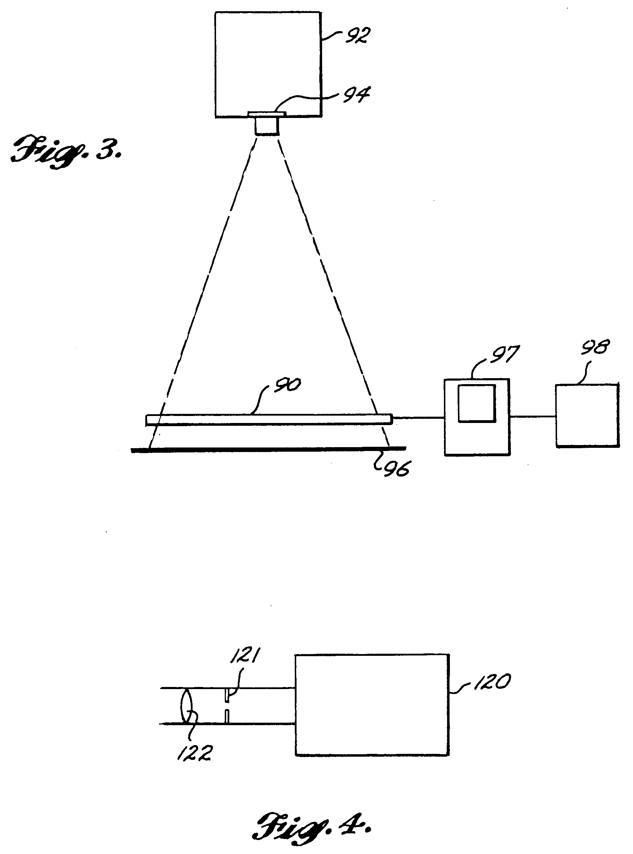

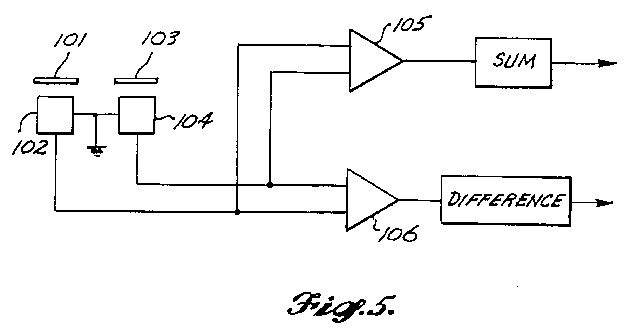

FIGURE 3 shows an alternative embodiment, involving a minimum of modification to an existing enlarger, that can be realized by placing an LCD array 90, which is essentially the same size as the finished print, at a predetermined distance above a photosensitive surface 96. A lamphouse 92 and negative holder 94 remain unmodified from the conventional enlarger apparatus. A computer and display 97 and a user input device, such as keyboard 98, are used, as in the previously discussed embodiments, to permit adjustment of the LCD array to achieve the desired color correction and contrast. In certain enlargers it may be necessary to place the TV camera effectively after the regular enlarger lens, so that lens modification to the enlarger is needed. FIGURE 4 shows a conventional TV camera 120 and lens 122 with the addition of a pinhole aperture 121. The pinhole aperture 121 avoids the need to adjust the TV camera when small final focus adjustments are made to the enlarger lens.

A calibration reference is used to ensure that repeatable results are obtained even though changes in temperature, aging of components, dust buildup, or the like occur. One possible reference setup is shown in FIGURE 5. For variable-contrast applications the calibrator uses filters 101 and 103 in combination with photodiodes 102 and 104 to measure the blue-to-green ratio using the outputs of both summing amplifier 105 and difference amplifier 106. For constant contrast situations, only the summed light level, i.e., the output of summing amplifier 105 is needed. By adding a red filter and an associated photodiode, the calibrator could be used in a color print system in which color balance, in addition to density and contrast, was adjusted.

In certain cases, it may instead by practicable to use a high-stability TV camera (as in FIGURES 1 or 2) in conjunction with known filters as the calibration reference.

In summary, therefore, a system for selectively adjusting the density of a photographic print using a matrix of individually controlled light valves, such as liquid crystal display elements, is provided. The image from the negative is scanned by a television camera, which feeds the signal to a processor that digitizes the image and stores it as a matrix array. The digitized image is then operated on, either by operator input or through software control, to selectively modify any element of the matrix as necessary to achieve an appropriate density mask. The density mask formed by the LCD matrix array is placed between a light source and the negative to be printed, in order to adjust the light transmission through the negative to thereby produce an enhanced photographic print. A monitor is coupled to the processor to view the digitized image simultaneously with its output to the LCD matrix so that a real-time monitoring of the alterations to the negative image can be made. With appropriately responsive photographic papers and a color-selective LCD array, local contrast, as well as density variations, can be made on the print.

While a preferred embodiment of the invention has been described and illustrated herein, it should be clear to those of ordinary skill in the art and others that modifications can be made to the illustrated and described embodiments, while remaining within the spirit and scope of the present invention. For example, in the embodiment of FIGURE 3, it is desirable to place the LCD matrix so that the image is out of focus with the paper 96 to prevent harsh contrast borders from area to area on the print. The image of the LCD can also be blurred by mechanically moving the LCD screen during printing or by electronically shifting the LCD image a few pixels back and forth. Also, the LCD screen can be placed on either side of the negative in the optical path. It is preferred to put the LCD screen ahead of the film negative in the optical path, since aberrations of the LCD will have less effect there than if the LCD were placed between the film negative and the print paper. Since the TV camera will typically have its own lens system, it can be placed to view the image from the negative directly; however, the camera could also be placed to view the image after it passes through the lens system of the optical printer. Even when only density corrections are desired onto color print paper, the LCD device is preferably color selective and adjusted over-all to maintain correct color balance.

## Claims

1. A photographic printer comprising: a light source (12;60;92); means (94) for holding a film negative (10;62) in the optical path so as to be illuminated by said light source (12;60;92) to form an image of the negative on a photosensitive element (20;96) mounted in the printer; a video camera (16;120) positioned for viewing the light passing the film negative (10;62) and producing a video signal representative of that image; a processor (26;78;97) coupled to said video camera (16;120); a matrix array (24;68;90) of light valve elements interposed between said light source (12;60;92) and the photosensitive element (20;96); control means (23;80;98) coupled to said processor (26;78;97), said processor (26;78;97) being arranged to selectively modify, as a function of the signals received from said control means (23;80;98), the light transmission of each element of the matrix array (24;68;90) to locally correct areas of over - or underexposure of said negative (10;62), characterised by said matrix array being a liquid crystal matrix array (24;68;90), said processor (26;78;97) comprising means for digitising the video signal from said video camera (16;120), and further characterised by a monitor (28) being coupled to said digitising means to enable an operator of the printer to view the resulting image of said film negative (10;62).

2. A photographic printer according to claim 1 characterised in that the said liquid crystal matrix array (24;68;90) is a black and white transmissive television screen.

3. A photographic printer according to claim 1 characterised in that the said liquid crystal matrix array (24;68;90) is a color-transmissive television screen.

4. A photographic printer according to claim 1 characterised in that the said digitizing means (26;78;97) and the control means (23;80;98) include a digital computer programmed to selectively modify said elements of the matrix array in accordance with a predetermined algorithm.

5. A photographic printer according to Claim 1, which is characterised in that it further includes vibrating means connected to said matrix array operable to reciprocate said matrix array transversely to said optical path.

6. A photographic printer according to Claim 1, characterised in that said video camera includes a pinhole lens (121) in conjunction with the conventional lens.

7. A photographic printer according to claim 1 which is characterised in that it further includes an optical calibration means selectively connectable to said processor means and said control means for providing reference signals to said system to adjust color ratios.

8. A photographic printer according to Claim 5, characterised in that it comprises a set of known value optical filters selectively placeable in the path of the video camera for calibrating the color balance and intensity of the exposure of the printer.

## Patentansprüche

1. Ein fotografisches Kopiergerät mit: einer Lichtquelle (12; 60; 92); Mitteln (94) zum Halten eines Filmnegativs (10; 62) im optischen Strahlengang, so daß es durch die besagte Lichtquelle (12; 60; 92) beleuchtet wird, um ein Abbild des Negativs auf einem im Kopiergerät angebrachten lichtempfindlichen Element (20; 96) zu bilden; einer Videokamera (16; 120), die zur Betrachtung des das Filmnegativ (10; 62) durchlaufenden Lichts positioniert ist und ein dieses Abbild darstellendes Videosignal produziert; einem mit der besagten Videokamera (16; 120) verbundenen Prozessor (26; 78; 97); einem Matrixfeld (24; 68; 90) von zwischen die besagte Lichtquelle (12; 60; 92) und das lichtempfindliche Element (20; 96) zwischengeschalteten Lichtventilelementen; mit dem besagten Prozessor (26; 78; 97) verbundenen Steuermitteln (23; 80; 98), wobei der Prozessor so angeordnet ist, daß er in Abhängigkeit von den von den besagten Steuermitteln (23; 80; 98) empfangenen Signalen die Lichtübertragung jedes Elements des Matrixfeldes (24; 68; 90) gezielt modifiziert, um Bereiche der Über- oder Unterbelichtung des besagten Negativs (10; 62) örtlich zu korrigieren, dadurch gekennzeichnet, daß das besagte Matrixfeld ein Flüssigkristall-Matrixfeld (24; 68; 90) ist, wobei der besagte Prozessor (26; 78; 97) Mittel für die Digitalisierung des Videosignals von der besagten Videokamera (16; 120) umfaßt, und dadurch, daß ein Monitor (28) mit den besagten Digitalisierungsmitteln verbunden ist, um einem Bediener des Kopiergeräts die Betrachtung des resultierenden Abbildes des besagten Filmnegativs (10; 62) zu ermöglichen.

2. Fotografisches Kopiergerät nach Anspruch 1, dadurch gekennzeichnet, daß das besagte Flüssigkristall-Matrixfeld (24; 68; 90) eine schwarz-weiß-durchlässige Fernsehrasterscheibe ist.

3. Fotografisches Kopiergerät nach Anspruch 1, dadurch gekennzeichnet, daß das besagte Flüssigkristall-Matrixfeld (24; 68; 90) eine farbdurchlässige Fernsehrasterscheibe ist.

4. Fotografisches Kopiergerät nach Anspruch 1, dadurch gekennzeichnet, daß die besagten Digitalisierungsmittel (26; 78; 97) und die Steuerungsmittel (23; 80; 98) einen digitalen Rechner enthalten, der zur gezielten Veränderung der besagten Elemente des Matrixfeldes nach einem vorbestimmten Algorithmus programmiert ist.

5. Fotografisches Kopiergerät nach Anspruch 1, dadurch gekennzeichnet, daß es weiterhin mit dem besagten Matrixfeld verbundene Vibriermittel zur Hin- und Herbewegung des besagten Matrixfeldes quer zum besagten optischen Strahlengang enthält.

6. Fotografisches Kopiergerät nach Anspruch 1, dadurch gekennzeichnet, daß die besagte Videokamera in Verbindung mit der herkömmlichen Linse eine Lochblendenlinse (121) enthält.

7. Fotografisches Kopiergerät nach Anspruch 1, dadurch gekennzeichnet, daß es weiterhin ein selektiv mit dem besagten Prozessormittel und besagten Steuerungsmitteln verbindbares optisches Eichungsmittel zur Bereitstellung von Referenzsignalen für das besagte System zur Einstellung von Farbverhältnissen enthält.

8. Fotografisches Kopiergerät nach Anspruch 5, dadurch gekennzeichnet, daß es einen Satz optischer Filter bekannten Wertes umfaßt, die gezielt zur Eichung der Farbabstimmung und Intensität der Belichtung des Kopiergeräts in dem Strahlengang der Videokamera plaziert werden können.

## Revendications

1. Une tireuse comprenant: une source lumineuse (12;60;92); un moyen (94) de support d'un négatif de film (10;62) dans la trajectoire optique de manière à l'éclairer par ladite source lumineuse (12;60;92) pour former une image du négatif sur un élément photosensible (20;96) monté dans la tireuse; une caméra vidéo (16;120) positionnée pour voir la lumière qui traverse le négatif de film (10;62) et produire un signal vidéo représentatif de cette image; un processeur (26;78;97) couplé à ladite caméra vidéo (16;120); un ensemble matrice (24;68;90) de modulateurs de lumières interposé entre la dite source lumineuse (12;60;92) et l'élément photosensible (20;96); un moyen de contrôle (23;80;98) couplé audit processeur (26;78;97), ledit processeur (26;78;97) étant disposé pour modifier sélectivement, en fonction des signaux reçus dudit moyen de contrôle (23;80;98) la transmission de lumière de chaque modulateur de l'ensemble matrice (24;68;90), pour corriger localement les zones de surexposition, ou sous-exposition,dudit négatif (10;62), caractérisée en ce que ledit ensemble matrice est un ensemble matrice à cristaux liquides (24;68;90), ledit processeur (26;78;97) comprend un moyen pour numériser le signal vidéo provenant de ladite caméra vidéo (16;120), et caractérisée en outre par un écran de contrôle (28) couplé audit moyen de numérisation pour permettre à l'opérateur de la tireuse de visualiser l'image produite à partir dudit négatif de film (10;62).

2. Une tireuse selon la revendication 1 caractérisée en ce que l'ensemble matrice à cristaux liquides (24;68;90) est un écran de télévision de transmission en noir et blanc.

3. Une tireuse selon la revendication 1 caractérisée en ce que l'ensemble matrice à cristaux liquides (24;68;90) est un écran de télévision de transmission en couleur.

4. Une tireuse selon la revendication 1 caractérisée en ce que ledit moyen de numérisation (26;78;97) et le moyen de contrôle (23;80;98) comportent un ordinateur numérique programmé pour modifier sélectivement lesdits éléments de l'ensemble matrice selon un algorithme prédéterminé.

5. Une tireuse selon la revendication 1 caractérisée en ce qu'elle comporte en outre un moyen vibratoire connecté audit ensemble matrice actionnable pour faire aller et venir ledit ensemble matrice transversalement à ladite trajectoire optique.

6. Une tireuse selon la revendication 1 caractérisée en ce que ladite caméra vidéo comprend un objectif à trou d'épingle (121) conjointement a l'objectif conventionnel.

7. Une tireuse selon la revendication 1 caractérisée en ce qu'elle comprend également un moyen d'étalonnage optique sélectivement connectable audit moyen processeur et audit moyen de contrôle pour fournir des signaux de référence audit système et ajuster les rapports de couleur.

8. Une tireuse selon la revendication 1 caractérisée en ce qu'elle comprend un ensemble de filtres optiques de valeur connue sélectivement plaçables dans la trajectoire de la caméra vidéo pour étalonner l'équilibre des couleurs et l'intensité d'exposition de la tireuse.
